# FASCICULE DE BREVET EUROPEEN

(11) **EP 0 489 615 B1**
(45) Date de publication et mention de la délivrance du brevet: **01.03.1995**
(21) Numéro de dépôt: 91403166.1
(22) Date de dépôt: 22.11.1991
(51) Int. Cl.: G01M 3/06, G01M 3/20

(54) **Procédé et dispositif de contrôle de l'étanchéité d'une enceinte telle que par exemple un compteur à gaz**
Verfahren und Vorrichtung zur Kontrolle der Dichtheit einer Einfassung wie z.B. eines Gaszählers
Method and device for controlling the tightness of an enclosure like a gas meter

(30) Priorité: 04.12.1990 FR 9015166
(43) Date de publication de la demande: 10.06.1992
(73) Titulaire: GAZ DE FRANCE, 75017 Paris (FR)
(72) Inventeur: David, Yvonnick Roger, F-76310 Sainte-Adresse (FR); Pomart, Jean Luc Michel Joseph, F-62136 Lestreme (FR)
(74) Mandataire: Beauchamps, Georges

(56) Documents cités:
- DE-A- 3 739 166
- FR-A- 2 034 651
- FR-A- 2 522 820
- SOVIET INVENTIONS ILLUSTRATED, Section EI, Week C44, 10 décembre 1980, Derwent Publications Ltd., London, GB; Class S, AN K5935 & SU-A-721 690
- SOVIET INVENTIONS ILLUSTRATED, Section EI, Week D52, 10 février 1982, Derwent Publications Ltd., London, GB; Class S, AN N3169 & SU-A-813 152

## Description

La présente invention a essentiellement pour objet un procédé de contrôle de l'étanchéité d'une enceinte quelconque et tout particulièrement d'un compteur de gaz.

Elle vise également un dispositif de contrôle pour la mise en oeuvre de ce procédé.

On connaît déjà divers procédés et appareils pour contrôler l'étanchéité d'une enceinte.

Ainsi, on a déjà proposé un procédé consistant à remplir l'enceinte à contrôler avec une certaine pression de gaz, tel que l'helium par exemple, à disposer cette enceinte dans un récipient contenant un gaz autre que l'hélium, et à effectuer un pompage de ce gaz pour l'amener à un détecteur afin de mesurer le taux en hélium de fuite qui est éventuellement passé dans l'autre gaz contenu dans le récipient.

Toutefois, une telle méthode présente des inconvénients, car elle ne peut pas s'appliquer aux enceintes à contrôler qui ne supportent pas la suppression, c'est-à-dire, dans le cas présent, l'action du vide exercée par la pompe raccordant le récipient au détecteur. Ainsi, une telle méthode ne peut pas s'appliquer aux compteurs à gaz qui ne peuvent pas supporter des pressions supérieures à 0,2-0,4 bar.

Aussi, pour contrôler l'étanchéité des compteurs à gaz, et étant donné qu'aucun système actuellement connu pour la détection des fuites soit par analyse de la pression, soit par analyse gazeuse ne convient, on utilise généralement la méthode qui consiste à immerger le compteur dans un récipient rempli de liquide, à remplir le compteur d'une certaine pression de gaz, et à observer les bulles résultant d'une fuite de gaz éventuelle.

Cependant, une telle méthode n'est que qualitative et visuelle, et ne permet pas de quantifier les fuites.

Par ailleurs, on connaît d'après le document DE-A-3 739 166 ou FR-A-2 034 651, un procédé et un appareil du type décrit dans le préambule des revendications 1 et 2, mais qui ne permettent pas un bon contrôle et une bonne précision de la mesure du taux de gaz de fuite.

Dès lors, la présente invention a pour but de remédier à tous ces inconvénients en proposant un procédé et un dispositif de contrôle de l'étanchéité des compteurs à gaz, qui n'utilisent aucune surpression ou aucun vide susceptible d'endommager ces compteurs, et permettent de mesurer le taux de fuite avec une grande précision malgré la forme généralement complexe que possèdent de tels compteurs.

A cet effet, l'invention a pour objet un procédé de contrôle de l'étanchéité d'une enceinte telle que par exemple un compteur à gaz et du type consistant à immerger l'enceinte ou compteur à contrôler dans un récipient rempli d'un liquide tel que l'eau par exemple, à remplir cette enceinte d'une certaine pression de gaz tel que par exemple hélium, et à recueillir dans une chambre d'analyse puis à analyser le gaz de fuite produit en cas de défaut d'étanchéité de l'enceinte, caractérisé en ce qu'on remplit de liquide le récipient jusqu'à son niveau maximum de remplissage correspondant à la zone de raccordement dudit récipient avec la chambre d'analyse située immédiatement au-dessus du récipient, on met en communication par l'intermédiaire d'une électrovanne ou analogue le récipient avec la chambre d'analyse pour y recueillir le gaz de fuite, et après que tout le gaz de fuite ait été recueilli, on isole du récipient la chambre d'analyse à l'aide de ladite électrovanne pour ensuite analyser le gaz de fuite contenu dans ladite chambre d'analyse.

L'invention vise encore un dispositif de contrôle pour la mise en oeuvre du procédé ci-dessus et du type comprenant un récipient contenant un liquide, tel que l'eau, et susceptible de recevoir une enceinte, telle que par exemple un compteur à gaz dont l'étanchéité est à contrôler, lequel récipient est raccordé à une chambre d'analyse, elle-même raccordée à un appareil d'analyse du gaz de fuite, caractérisé en ce que la partie supérieure du récipient est raccordée à la chambre d'analyse par l'intermédiaire d'une électrovanne ou analogue.

Suivant une autre caractéristique de ce dispositif, la chambre d'analyse est obturée par un piston susceptible de lui conférer un volume variable.

Le dispositif de l'invention est encore caractérisé par un circuit d'alimentation en liquide du récipient comprenant une purge associée à l'électrovanne précitée.

L'enceinte ou compteur à gaz à contrôler est reliée à un circuit d'alimentation en gaz traversant de façon étanche la paroi du récipient.

Suivant encore une autre caractéristique de ce dispositif, un circuit de vide et/ou de purge est associé à la chambre d'analyse.

Le récipient peut être tout simplement constitué par un caisson étanche raccordé par sa partie supérieure à la chambre d'analyse, et cela, via l'électrovanne précitée.

Suivant un autre mode de réalisation, le récipient peut être constitué par un bac dans lequel est immergée une cloche solidaire de, et communiquant avec, la chambre d'analyse via l'électrovanne.

Mais d'autres caractéristiques et avantages de l'invention apparaîtront mieux dans la description détaillée qui suit et se réfère aux dessins annexés donnés uniquement à titre d'exemple, et dans lesquels.

La figure 1 est une vue schématique et en élévation d'un appareil de contrôle de l'étanchéité d'un compteur à gaz, conforme au principe de l'invention.

La figure 2 est une vue encore schématique et en élévation d'un autre mode de réalisation cet appareil.

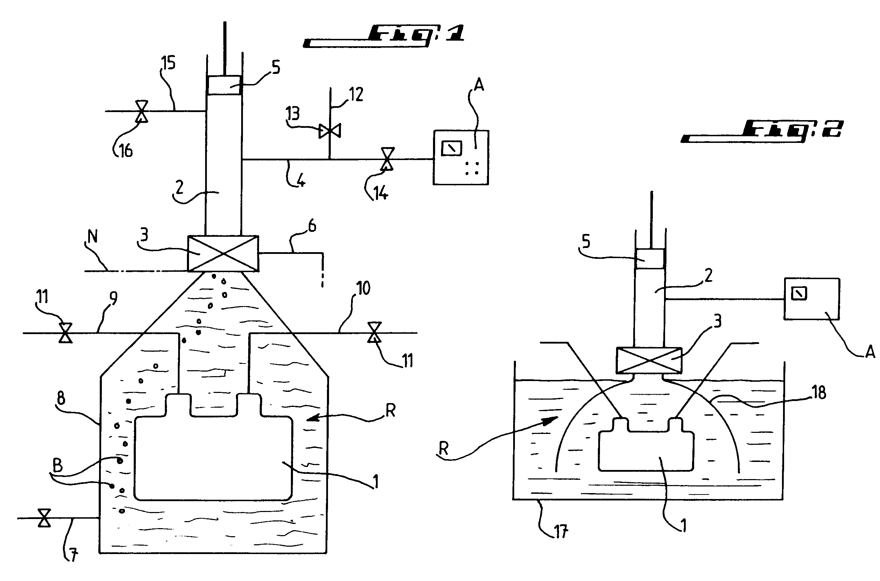

Suivant l'exemple de réalisation montré sur la figure 1, un dispositif de contrôle de l'étanchéité d'un compteur de gaz 1, conforme à cette invention, comprend essentiellement un récipient R contenant par exemple de l'eau, avec éventuellement un ou plusieurs adjuvants, et une chambre d'analyse 2 surmontant le récipient R et raccordée à la partie supérieure de celui-ci par l'intermédiaire d'une électrovanne 3 permettant d'isoler le récipient R de la chambre d'analyse 2.

Cette chambre d'analyse 2 est reliée par une conduite 4 à un appareil de détection et/ou de mesure du taux de gaz de fuite contenu dans la chambre 2, ledit appareil étant montré schématiquement en A sur la figure 1.

A sa partie supérieure, la chambre d'analyse 2 qui présente par exemple la forme d'un tube vertical, comporte un système d'obturation constitué par un piston 5 actionnable par tout moyen approprié et susceptible de conférer à la chambre 2 un volume variable.

On a montré schématiquement en 6 un conduit de purge du récipient R, associé à l'électrovanne 3, et en 7 un conduit d'alimentation en liquide de ce récipient.

Le compteur à gaz 1 qui sera immergé dans le liquide du récipient R, comme on le décrira plus loin à propos du fonctionnement, est relié à un circuit d'alimentation en gaz, tel que hélium, traversant de façon étanche la paroi 8 du récipient R par tout moyen approprié et non représenté, ce circuit étant matérialisé sur la figure 1 par des conduites 9 et 10 d'entrée et de sortie du gaz munies comme connu en soi, d'une vanne 11.

La chambre d'analyse 2 peut être équipée d'un circuit de vide ou de purge qui est mis en oeuvre entre chaque contrôle d'étanchéité. Suivant l'exemple de réalisation représenté sur la figure 1, on peut, à cet effet, prévoir une conduite 12 équipée d'une vanne 13 et reliée entre chambre 2 et appareil A à la conduite 4, elle-même équipée d'une vanne 14. Une autre conduite 15 avec vanne 16 peut être reliée à la chambre d'analyse 2 pour permettre l'évacuation du gaz de purge de la chambre 2, laquelle évacuation pourrait tout simplement être effectuée par enlèvement du piston 5 de la chambre 2, dans quel cas la conduite 15 ne serait pas nécessaire.

Le récipient R, comme on le voit bien sur la figure 1, présente la forme d'un caisson unitaire avec partie supérieure conique, étant bien entendu qu'on pourrait adopter toute autre forme sans sortir du cadre de l'invention.

Suivant la variante représentée sur la figure 2, le récipient R est constitué de deux parties, à savoir, un bac 17 contenant un liquide tel que l'eau, et une cloche 18 qui est immergée dans le liquide du bac 17, au-dessus du compteur à gaz 1 dont l'étanchéité est à contrôler. La cloche 18 est solidaire de et communique avec la chambre d'analyse 2 via l'électrovanne 3, comme expliqué précédemment.

Le récipient R peut donc être réalisé en une ou plusieurs parties, de même d'ailleurs que la chambre d'analyse 2. L'appareil de détection et de mesure A pourra se trouver à l'extérieur ou à l'intérieur du dispositif, et il sera par exemple constitué par un capteur de pression, de conductivité thermique, d'une sonde ou tout appareil approprié à l'analyse du gaz de fuite contenu dans la chambre 2.

Egalement, bien que cela ne soit pas représenté, le dispositif de l'invention peut comprendre un système automatique gérant l'ouverture et la fermeture des vannes et/ou électrovannes et des temporisations afin d'obtenir un cycle correct de contrôle.

Pour une meilleure compréhension de l'invention, on expliquera ci-après en détail les différentes étapes de ce cycle de contrôle en s'aidant de la figure 1 notamment.

Tout d'abord, on réalise éventuellement un balayage du volume du compteur à gaz 1 à contrôler pendant quelques secondes afin que ce dernier ne contienne que du gaz test, par exemple de l'hélium, du méthane ou tout autre gaz détectable et analysable par l'appareil A.

Après ce balayage éventuel, le compteur 1 est immergé dans le récipient R, cette immersion étant réalisée par purge du récipient R. Plus précisément, le récipient R est rempli, par la conduite 7, de liquide, tel que de l'eau, jusqu'à son niveau de remplissage maximum repéré en N, et cela en purgeant le liquide via l'électrovanne 3 et la conduite 6.

La purge étant effectuée, on met en communication le récipient R avec la chambre d'analyse 2, toujours grâce à l'électrovanne 3.

Puis le compteur 1 est mis sous pression pendant quelques secondes, et il est ensuite remis à la pression atmosphérique. La pression de gaz test dans le compteur 1 pourra être la pression normale d'utilisation, c'est-à-dire une pression comprise entre environ 0,2 et 0,4 bar.

S'il y a des fuites, des bulles B apparaîtront dans le liquide contenu dans le récipient R et celles-ci auront tendance à monter à la partie supérieure du récipient, comme on le voit bien sur la figure 1.

Après un certain temps (temps nécessaire aux bulles B pour remonter, après que la pression soit revenue à la pression atmosphérique), l'électrovanne 3 est actionnée afin d'isoler la chambre d'analyse 2 du récipient R.

Le contenu en gaz de la chambre isolée 2 est alors analysé par l'appareil A utilisant une méthode appropriée quelconque de détection des gaz de fuite.

On observera ici qu'il est possible d'effectuer le vide dans la chambre d'analyse 2 sans que cela ne soit perçu par le compteur.

Après que le contrôle par l'appareil A a été effectué, on purge la chambre d'analyse 2 avec un fluide neutre, et cela en fermant l'électrovanne 14, en ouvrant l'électrovanne 13, en ouvrant la vanne 16 ou en retirant le piston 5 de la chambre 2, et en alimentant la conduite 12 en gaz de purge pendant quelques secondes, étant bien entendu que l'électrovanne 3 demeure fermée.

Cette purge étant terminée, on peut alors procéder au contrôle de l'étanchéité d'un autre compteur à gaz 1 suivant la séquence d'opérations décrite ci-dessus.

Il est possible, avec le dispositif qui vient d'être décrit, de contrôler l'étanchéité non seulement des enceintes ne supportant pas le vide, mais aussi des enceintes supportant le vide, et cela avec divers types d'appareils appropriés de détection et/ou de mesure du taux de fuite. L'analyse ou la mesure de la fuite est précise car, l'isolement de la chambre 2 du récipient R permet de collecter la totalité du gaz de fuite. En outre, comme dit précédemment, la possibilité de faire varier le volume de la chambre d'analyse 2 permet d'obtenir une dilution moindre de la fuite. Le dispositif selon cette invention peut également être automatisé de façon à permettre des contrôles d'étanchéité en série.

Enfin, on comprend que les paramètres tels que le temps de mise sous pression du compteur, le volume de la chambre d'analyse et la concentration du gaz test, influent directement sur la concentration du gaz à analyser, de sorte qu'un choix judicieux de ces paramètres ainsi que de l'appareil A de détection et de mesure, peut permettre un contrôle avec des fluides test de faible concentration.

Bien entendu, l'invention n'est nullement limitée aux modes de réalisation décrits et illustrés qui n'on été donnés qu'à titre d'exemple.

C'est ainsi que le dispositif de l'invention peut être utilisé avec divers systèmes de détection et de mesure des fuites.

## Revendications

1. Procédé de contrôle de l'étanchéité d'une enceinte telle que par exemple un compteur à gaz (1) et du type consistant à immerger l'enceinte ou compteur à contrôler dans un récipient (R) rempli d'un liquide tel que l'eau par exemple, à remplir cette enceinte d'une certaine pression de gaz tel que par exemple hélium, et à recueillir dans une chambre d'analyse (2) puis à analyser le gaz de fuite produit en cas de défaut d'étanchéité de l'enceinte, caractérisé en ce qu'on remplit de liquide le récipient (R) jusqu'à son niveau maximum de remplissage correspondant à la zone de raccordement dudit récipient avec la chambre d'analyse (2) située immédiatement au-dessus du récipient, on met en communication par l'intermédiaire d'une électrovanne ou analogue (3) le récipient (R) avec la chambre d'analyse (2) pour y recueillir le gaz de fuite, et après que tout le gaz de fuite ait été recueilli, on isole du récipient la chambre d'analyse (2) à l'aide de ladite électrovanne (3) pour ensuite analyser le gaz de fuite contenu dans ladite chambre d'analyse.

2. Dispositif de contrôle pour la mise en oeuvre du procédé selon la revendication 1, et du type comprenant un récipient (R) contenant un liquide, tel que l'eau, et susceptible de recevoir une enceinte, telle que par exemple un compteur à gaz (1) dont l'étanchéité est à contrôler, lequel récipient (R) est raccordé à une chambre d'analyse (2), elle-même raccordée à un appareil (A) d'analyse du gaz de fuite, caractérisé en ce que la partie supérieure du récipient (R) est raccordée à la chambre d'analyse (2) par l'intermédiaire d'une électrovanne ou analogue (3).

3. Dispositif selon la revendication 2, caractérisé en ce que la chambre d'analyse précitée (2) est obturée par un piston (5) susceptible de lui conférer un volume variable.

4. Dispositif selon la revendication 2 ou 3, caractérisé par un circuit (7) d'alimentation en liquide du récipient comprenant une purge (6) associée à l'électrovanne précitée (3).

5. Dispositif selon l'une des revendications 2 à 4, caractérisé en ce que l'enceinte ou compteur à gaz (1) à contrôler est relié à un circuit (9, 10) d'alimentation en gaz traversant de façon étanche la paroi (8) du récipient (R).

6. Dispositif selon l'une des revendications 2 à 5, caractérisé en ce qu'à la chambre d'analyse précitée est associé un circuit de vide et/ou de purge (12, 4, 15) de cette chambre.

7. Dispositif selon l'une des revendications 2 à 6, caractérisé en ce que le récipient précité (R) est constitué par un caisson étanche raccordé par sa partie supérieure à la chambre d'analyse (2), ou par un bac (17) dans lequel est immergée une cloche (18) solidaire de et communiquant avec la chambre d'analyse (2) via l'électrovanne précitée (3).

## Patentansprüche

1. Verfahren zur Kontrolle der Dichtheit einer Umhüllung, wie z.B. eines Gaszählers (1) und derjenigen Gattung, die darin besteht, die zu überprüfende Umhüllung bzw. den zu überprüfenden Zähler in einem mit einer Flüssigkeit, wie z.B. Wasser gefüllten Behälter (R) einzutauchen, diese Umhüllung mit einem gewissen Druck eines Gases wie z.B. Helium zu füllen und das im Falle einer Undichtigkeit erzeugte Leckagegas in einer Analysenkammer (2) aufzufangen und dann zu analysieren, dadurch gekennzeichnet, dass man den Behälter (R) mit Flüssigkeit bis zu seiner grössten Füllungshöhe füllt, welche dem Bereich der Verbindung des besagten Behälters mit der unmittelbar oberhalb des Behälters gelegenen Analysenkammer (2) entspricht, man den Behälter (R) über ein Elektroventil mit der Analysenkammer (2) in Verbindung setzt, um dort das Leckagegas aufzufangen und nachdem das ganze Leckagegas aufgefangen worden ist, man die Analysenkammer (2) mit Hilfe des besagten Elektroventils (3) von dem Behälter isoliert, um sodann das in der besagten Analysenkammer enthaltene Leckagegas zu analysieren.

2. Kontrollvorrichtung zur Durchführung des Verfahrens gemäss Anspruch 1 und der einen eine Flüssigkeit wie Wasser enthaltenden Behälter (R) aufweisenden Gattung, der geeignet ist, eine Umhüllung, wie z.B. einen Gaszähler (1), deren Dichtheit zu überprüfen ist, aufzunehmen, welcher Behälter (R) an einer Analysenkammer (2) angeschlossen ist, die selber mit einem Gerät (A) zur Analyse des Lekagegases verbunden ist, dadurch gekennzeichnet, dass der obere Teil des Behälters (R) mit der Analysenkammer (2) über ein Elektroventil oder dergleichen (3) verbunden ist.

3. Vorrichtung nach Anspruch 2, dadurch gekennzeichnet, dass die vorgenannte Analysenkammer (2) durch einen Kolben (5) verschlossen wird, der geeignet ist, ihr ein veränderliches Volumen zu verleihen.

4. Vorrichtung nach Anspruch 2 oder 3, gekennzeichnet durch einen einen dem vorgenannten Elektroventil (3) zugeordneten Ablaß (6) umfassenden Kreislauf (7) zur Speisung des Behälters mit Flüssigkeit.

5. Vorrichtung nach einem der Ansprüche 2 bis 4, dadurch gekennzeichnet, dass die zu überprüfende Umhüllung bzw. der zu überprüfende Gaszähler (1) mit einem die Wand (8) des Behälters (R) in abgedichteter Weise durchsetzenden Gaszufuhrkreislauf (9, 10) verbunden ist.

6. Vorrichtung nach einem der Ansprüche 2 bis 5, dadurch gekennzeichnet, dass die vorgenannte Analysenkammer (2) einem Vakuum- und/oder Ablasskreislauf (12, 4, 15) für diese Kammer zugeordnet ist.

7. Vorrichtung nach einem der Ansprüche 2 bis 6, dadurch gekennzeichnet, dass der vorgenannte Behälter (R) durch einen mit seinem oberen Teil an die Analysenkammer (2) angeschlossenen dichten Kasten oder durch eine Schale (17) in welcher eine mit der Analysenkammer (2) fest verbundene und über das vorgenannte Elektroventil (3) in Verbindung stehende Glocke (18) eingetaucht ist, gebildet wird.

## Claims

1. Method of controlling the fluid-tightness of an enclosure such for example as a gas meter (1) and of the type consisting in immersing the enclosure or meter to be checked into a tank (R) filled with a liquid such as water for example, filling this enclosure with a certain pressure of a gas such for example as helium and collecting in an analysis chamber (2) and then analyzing the leakage gas produced in case of a fluid-tightness defect of the enclosure, characterized in that one fills with liquid the tank (R) up to its maximum filling level corresponding to the zone of connection of the said tank to the analysis chamber (2) located immediately above the tank, one puts through the medium of an electrovalve or the like (3) the tank (R) in communication with the analysis chamber (2) to collect the leakage gas therein and after all the leakage gas has been collected, one isolates the analysis chamber (2) from the tank with the assistance of the said electrovalve (3) to then analyze the leakage gas contained in the said analysis chamber.

2. Control device for putting the method according to claim 1 in use and of the type comprising a tank (R) containing a liquid such as water and capable of receiving an enclosure such for example as a gas meter (1) the fluid-tightness of which has to be checked, which tank (R) is connected to an analysis chamber (2) itself connected to a leakage gas analyzing apparatus (A), characterized in that the upper portion of the tank (R) is connected to the analysis chamber (2) through the medium of an electrovalve or the like (3).

3. Device according to claim 2, characterized in that the aforesaid analysis chamber (2) is closed by a piston (5) capable of imparting a variable volume thereto.

4. Device according to claim 2 or 3, characterized by a circuit (7) for feeding the tank with liquid, comprising a drain (6) associated with the aforesaid electrovalve (3).

5. Device according to one of claims 2 to 4, characterized in that the enclosure or gas meter (1) to be checked is connected to a gas supply circuit (9, 10) extending in a fluid-tight manner through the wall (8) of the tank (R).

6. Device according to one of claims 2 to 5, characterized in that the aforesaid analysis chamber is associated with a vacuum and/or drain circuit (12, 4, 15) for that chamber.

7. Device according to one of claims 2 to 6, characterized in that the aforesaid tank (R) is constituted by a fluid-tight casing connected with its upper part to the analysis chamber (2) or by a vat (17) into which is immersed a bell-jar (18) made fast to and communicating with the analysis chamber (2) via the aforesaid electrovalve (3).
